# FASCICULE DE BREVET EUROPEEN

(11) **EP 1 668 650 B1**
(45) Date de publication et mention de la délivrance du brevet: **23.12.2009**
(21) Numéro de dépôt: 04787417.7
(22) Date de dépôt: 22.09.2004
(51) Int. Cl.: G21F 5/008

(54) **PROCEDE ET DISPOSITIF DE CONDITIONNEMENT DE CRAYONS DE COMBUSTIBLE NUCLEAIRE NON ETANCHES EN VUE DE LEUR TRANSPORT ET DE LEUR STOCKAGE OU ENTREPOSAGE DE LONGUE DUREE**
VERFAHREN UND EINRICHTUNG ZUR AUFBEREITUNG UNVERSIEGELTER KERNBRENNSTOFFSTÄBE FÜR DEN TRANSPORT UND DIE LANGZEITLAGERUNG ODER ZWISCHENLAGERUNG DAFÜR
METHOD AND DEVICE FOR THE CONDITIONING OF UNSEALED NUCLEAR FUEL RODS FOR THE TRANSPORT AND LONG-TERM STORAGE OR WAREHOUSING THEREOF

(30) Priorité: 01.10.2003 FR 0311510
(43) Date de publication de la demande: 14.06.2006
(73) Titulaire: Areva NP, 92400 Courbevoie (FR)
(72) Inventeur: VERON, Jean-Luc, F-69300 CALUIRE (FR)
(74) Mandataire: Domenego, Bertrand
(86) Numéro de dépôt international: PCT/FR2004/002389
(87) Numéro de publication internationale: WO 2005/034217

(56) Documents cités:
- EP-A- 0 147 183
- EP-A- 0 218 054
- EP-A- 1 248 270
- DE-A- 19 640 393
- FR-A- 2 530 366
- US-A- 3 216 174

## Description

L'invention concerne un procédé et un dispositif de conditionnement de crayons combustibles non étanches en vue de leur transport et de leur stockage ou entreposage de longue durée.

Dans les réacteurs nucléaires refroidis par de l'eau, et en particulier dans les réacteurs nucléaires refroidis par de l'eau sous pression, on utilise des assemblages de combustible comportant une ossature à l'intérieur de laquelle sont placés des crayons de combustible constitués chacun d'une gaine tubulaire remplie de pastilles de combustible, par exemple des pastilles d'oxyde d'uranium UO₂ et fermée à ses extrémités par des bouchons étanches.

La gaine des crayons et les bouchons sont généralement en alliage de zirconium et l'on effectue le remplissage de la gaine par de l'hélium sous pression avant de sceller le crayon de manière totalement étanche.

A l'intérieur du réacteur nucléaire en fonctionnement, la gaine des crayons subit des contraintes mécaniques et peut être soumise à la corrosion, de telle sorte qu'il peut apparaître des fissures traversant la gaine sur certains crayons des assemblages de combustible. Le crayon n'est alors plus étanche, l'hélium contenu dans la gaine et les gaz de fission formés par le combustible peuvent traverser la gaine, ce qui produit une dissémination de produits radioactifs dans l'environnement de l'assemblage de combustible.

Lors des arrêts du réacteur nucléaire, par exemple pour rechargement ou entretien et réparation, on décharge au moins une partie des assemblages de combustible du coeur, ces assemblages de combustible étant placés dans une piscine du combustible à l'intérieur de laquelle on effectue certaines opérations de réparation et de remise en état des assemblages de combustible usagés.

En particulier, lors de ces opérations de réparation et de remise en état des assemblages de combustible, on prélève les crayons de combustible non étanches des assemblages de combustible, ces crayons non étanches étant par exemple stockés de manière temporaire dans une structure de stockage à l'intérieur de la piscine du combustible.

La récupération du combustible contenu dans les crayons peut être effectuée théoriquement dans des usines de retraitement de combustible dans lesquelles on sépare le matériau combustible des gaines usagées et fissurées qui sont traitées comme des déchets radioactifs. Toutefois, depuis quelques années, la réglementation en vigueur a tendance à interdire le transport de crayons de combustible qui peuvent produire une dissémination de matières radioactives, entre les centrales et les usines de retraitement.

Il est donc nécessaire de prévoir des procédés et dispositifs permettant de réaliser le stockage de longue durée de crayons de combustible non étanches sans opérations de transport entre les réacteurs nucléaires et des usines de retraitement ou, dans certains cas, le transport de crayons non étanches dans des enveloppes étanches.

DE-196 40 393 a proposé en particulier d'utiliser des capsules comportant une enveloppe tubulaire susceptible de contenir un crayon de combustible et qui est fermée à ses extrémités par des bouchons qui peuvent être fixés de manière étanche sur les parties d'extrémité de l'enveloppe de la capsule. Les bouchons fixés aux deux extrémités de la capsule comportent également chacun une soupape à l'intérieur d'un canal traversant le bouchon qui permet de réaliser une purge du crayon non étanche qui s'est généralement rempli d'eau à l'intérieur de la piscine, ainsi que la mise sous gaz inerte du volume interne de la capsule. Après fermeture étanche des bouchons aux extrémités de la capsule, on a réalisé un confinement du crayon présentant une fuite, de sorte qu'il n'est plus susceptible de causer une dissémination de produits radioactifs dans le milieu environnant. Les capsules sont prévues pour pouvoir être introduites dans des structures de support. Ces structures de support dans lesquelles les crayons non étanches ont été encapsulés peuvent être transportées vers un site de stockage, une usine de retraitement ou un laboratoire chaud pour examen ou expertise.

On connaît également des dispositifs de transport de matériaux combustibles irradiés qui comportent à l'intérieur d'un conteneur de transport équipé de moyens de fermeture des extrémités du conteneur, de moyens d'amortissement des chocs et de moyens de préhension permettant sa manutention, des étuis de forme tubulaire à section carrée qui peuvent être fermés de manière étanche par des fonds ou couvercles soudés aux extrémités de l'étui dans lequel on place les matériaux combustibles irradiés.

Dans le cas où l'on veut réaliser le stockage de longue durée ou l'entreposage de très longue durée de crayons combustibles non étanches qui sont stockés à l'intérieur d'une piscine, les dispositifs d'encapsulage ou de transport connus ne permettent pas de réaliser de manière simple et pratique le conditionnement de crayons combustibles non étanches en grande quantité.

On entend par "entreposage" de matières nucléaires, un stockage permettant de récupérer ces matières à un moment quelconque. Un tel entreposage de très longue durée peut être prévu par exemple sur une durée de 300 ans ou plus. Un stockage de longue durée peut être prévu par exemple pour une durée de 50 à 100 ans.

Dans le cas de l'exploitation continue d'un réacteur nucléaire, il peut être nécessaire, après un certain temps de fonctionnement du réacteur, de réaliser l'élimination d'un grand nombre de crayons non étanches qui ont été enlevés d'assemblages de combustible, au cours de campagnes successives de rechargement et d'entretien du réacteur nucléaire.

Le but de l'invention est donc de proposer un procédé de conditionnement de crayons de combustible non étanches selon la revendication 1.

Selon des modes particuliers de réalisation, le procédé peut présenter des caractéristiques des revendications dépendantes 2 à 7.

L'invention a également pour objet un dispositif de conditionnement selon la revendication 8.

Selon des modes particuliers de réalisation, le dispositif peut présenter des caractéristiques des revendications dépendantes 9 à10.

Afin de bien faire comprendre l'invention, on va maintenant décrire, à titre d'exemple, en se référant aux figures jointes en annexe, un mode de réalisation du procédé de conditionnement suivant l'invention et du dispositif pour sa mise en oeuvre, dans le cas de stockage de crayons combustibles non étanches d'assemblages de combustible d'un réacteur nucléaire à eau sous pression.
La figure 1 est une vue schématique en élévation d'un assemblage de combustible d'un réacteur nucléaire à eau sous pression.
La figure 2 est une vue partielle en élévation d'une capsule destinée à recevoir un crayon non étanche de l'assemblage de combustible.
La figure 3 est une vue en coupe axiale de la capsule représentée sur la figure 2.
La figure 4 est une vue en élévation d'une structure de support de capsules sous la forme d'un carquois.
La figure 5 est une vue en coupe transversale suivant 5-5 de la figure 4.
La figure 6 est une vue de dessus d'un dispositif de guidage et de maintien des capsules.

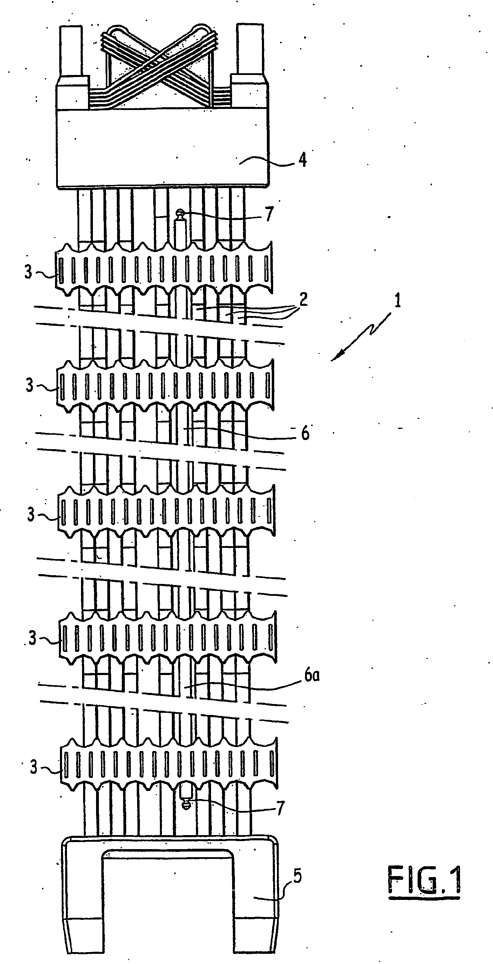

Sur la figure 1, on a représenté le squelette d'un assemblage de combustible pour réacteur nucléaire à eau sous pression désigné de manière générale par le repère 1.

Le squelette de l'assemblage de combustible 1 comporte en particulier des tubes-guides 2 de direction longitudinale et des grilles-entretoises 3 délimitant chacune un réseau de cellules destinées à recevoir des crayons de combustible, certaines cellules étant prévues pour le passage des tubes-guides 2 à l'intérieur des grilles-entretoises 3 réparties suivant la longueur des tubes 2.

Le squelette comporte de plus, à l'une de ses extrémités, un embout supérieur 4 et, à sa seconde extrémité, un embout inférieur 5, l'un au moins des embouts d'extrémité 4 et 5 assurant la fermeture de l'assemblage de combustible étant fixé de manière amovible, sur les extrémités des tubes 2.

On a représenté, à l'intérieur du squelette de l'assemblage de combustible 1, pour plus de clarté, un seul crayon de combustible 6 qui présente une longueur inférieure à la longueur des tubes-guides 2 et qui est engagé dans des cellules alignées des grilles-entretoises successives 3.

Le crayon de combustible 6 comporte une gaine 6a tubulaire, généralement en alliage de zirconium qui renferme une colonne de pastilles de combustible empilées dans la direction axiale du crayon et qui est fermée à ses extrémités par des bouchons de fermeture étanche 7. Les bouchons 7 du crayon de combustible 6 présentent une forme profilée, de manière à permettre l'accrochage de la pince d'un outil de manutention du crayon de combustible ou de mise en place des bouchons aux extrémités axiales de la gaine 6a.

Après remplissage par des pastilles de combustible de la gaine fermée à l'une de ses extrémités par un bouchon, on met en place le second bouchon et on réalise une vidange de l'air contenu dans la gaine et un remplissage de la gaine par de l'hélium sous pression.

Après un certain temps d'utilisation dans le coeur d'un réacteur nucléaire, certains des assemblages de combustible du coeur peuvent présenter des crayons dont la gaine est fissurée, si bien que cette gaine n'est plus étanche. Dans ce cas, l'hélium de remplissage est susceptible de s'échapper de la gaine en entraînant des produits de fission dans le circuit primaire du réacteur nucléaire.

Pendant une période de rechargement du réacteur nucléaire, on effectue, généralement dans la piscine du combustible de la centrale nucléaire, un contrôle des assemblages de combustible pour déterminer la présence éventuelle de crayons non étanches également appelés "crayons défectueux" dans ces assemblages de combustible.

Les crayons non étanches peuvent être prélevés dans des assemblages de combustible après démontage de leur embout supérieur ou inférieur suivant le procédé utilisé et stockés éventuellement dans un moyen de réception tel qu'un carquois, dans la piscine du combustible. Il est possible également de placer les assemblages de combustible ayant un ou plusieurs crayons non étanches dans des alvéoles de râteliers de stockage d'assemblages de combustible, à l'intérieur de la piscine du combustible.

Pour la mise en oeuvre du procédé suivant l'invention, les crayons non étanches sont introduits dans des capsules qui sont ensuite fermées par des bouchons de manière étanche, à leurs extrémités.

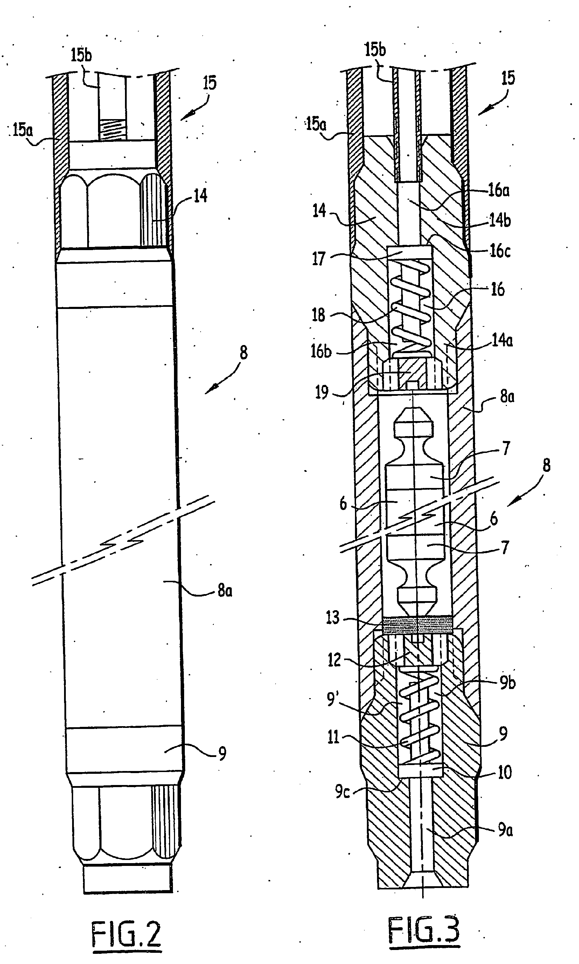

Sur les figures 2 et 3, on a représenté une capsule 8 prévue pour contenir un crayon de combustible non étanche.

La capsule 8 comporte un corps tubulaire 8a généralement à section circulaire dont le diamètre intérieur est supérieur au diamètre de la gaine 6a et des bouchons 7 d'un crayon de combustible. Le corps tubulaire 8a de la capsule présente une longueur supérieure à la longueur d'un crayon de combustible, cette longueur étant par exemple proche de 5 mètres.

La gaine tubulaire 8a de la capsule 8 est fermée à son extrémité inférieure par un bouchon inférieur 9 qui peut être rapporté et fixé par soudage à l'extrémité inférieure de la gaine 8.

Le bouchon inférieur 9 est traversé suivant son axe par un canal comportant une partie d'extrémité inférieure 9a débouchant à l'extrémité inférieure de la capsule 8 et une partie supérieure 9b ayant un diamètre supérieur à la partie d'extrémité 9a et définissant un siège 9c pour une soupape de fermeture 10 du canal traversant axialement le bouchon inférieur de la capsule. L'obturateur de la soupape 10 est rappelé en position de fermeture sur le siège 9c par un ressort hélicoïdal 11 intercalé entre une pièce d'appui 12 vissée à l'intérieur d'une partie du canal 9' débouchant dans le corps tubulaire de la capsule et une partie d'appui de l'obturateur de la soupape 10. La pièce d'appui 12 qui comporte des ouvertures axiales de passage de fluide assure la fixation et le support d'un élément de filtration 13 d'un fluide amené à s'écouler à travers le canal 9' à la partie d'extrémité inférieure de la capsule 8, lors de l'ouverture de la soupape 10.

Un second bouchon ou bouchon supérieur 14 est destiné à fermer l'extrémité supérieure de la gaine 8a de la capsule 8 de manière amovible.

Sur la figure 2, on a représenté le bouchon 14 de fermeture supérieure de la capsule qui est introduit à l'intérieur d'un outil 15 de vissage et d'amenée de gaz sous pression dans la capsule.

Sur la figure 3, on a représenté le bouchon 14 en position de fermeture à l'extrémité supérieure de la capsule, après qu'on a introduit un crayon de combustible 6 comportant des bouchons d'extrémité 7 à l'intérieur de la capsule.

Le bouchon 14 comporte une partie filetée 14a destinée à être introduite et vissée dans une ouverture taraudée, à l'extrémité supérieure de la gaine 8a de la capsule 8. Le bouchon vissé est en appui étanche sur une surface d'appui à l'extrémité axiale du corps 8a de la capsule 8. Le bouchon 14 comporte une partie d'extrémité 14b opposée à sa partie filetée 14a qui présente une forme profilée, par exemple à section hexagonale permettant de solidariser en rotation le bouchon 14 et un fourreau extérieur 15a de l'outil 15 pour assurer le vissage ou le dévissage du bouchon.

Le bouchon 14 est traversé suivant toute sa longueur dans la direction axiale par un canal 16 comportant une partie d'extrémité 16a débouchant à l'extrémité supérieure de la capsule et une partie 16b à plus grand diamètre que la partie 16a débouchant à l'extrémité du bouchon 14 destinée à être introduite dans la gaine 8a de la capsule. Entre la première partie 16a du canal 16 et la seconde partie 16b à plus grand diamètre, est ménagé un siège 16c pour assurer l'appui d'un obturateur d'une soupape 17 de fermeture du canal 16 rappelé en position de fermeture par un ressort hélicoïdal 18 intercalé entre un élément d'appui 19 vissé dans la partie d'extrémité débouchant dans la partie 16b du canal 16 et un épaulement d'appui de l'obturateur de soupape 17.

L'élément d'appui vissé 19 comporte des canaux axiaux de passage de fluide.

La première partie 16a du canal 16 débouchant à l'extrémité supérieure de la capsule comporte un taraudage de fixation d'un tube 15b d'amenée de gaz fixé en position coaxiale à l'intérieur du tube extérieur profilé de l'outil 15 utilisé pour le vissage et le dévissage des bouchons supérieurs des capsules.

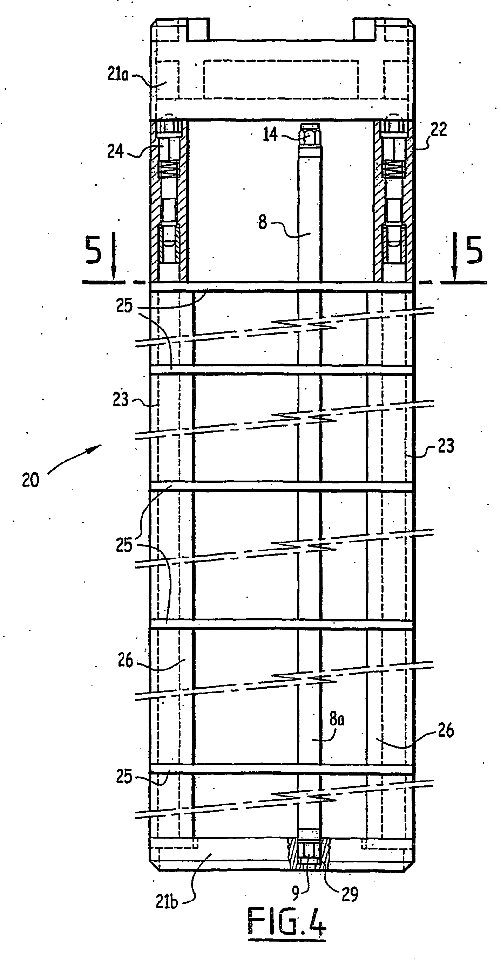

Sur la figure 4, on a représenté une structure 20 constituant à la fois une structure de chargement et une structure de support de capsule 8 qui peut être utilisée, d'une part, pour le remplissage des capsules en crayons non étanches et, d'autre part, pour le stockage des capsules renfermant des crayons non étanches.

La structure de support 20 ou carquois présente la forme et les dimensions d'un assemblage de combustible pour réacteur nucléaire à eau sous pression tel que représenté sur la figure 1.

En particulier, la structure de support 20 comporte un embout supérieur 21 a et un embout inférieur 21 b ayant une section de forme carrée dont le côté est sensiblement égal au côté d'un embout carré d'assemblage de combustible.

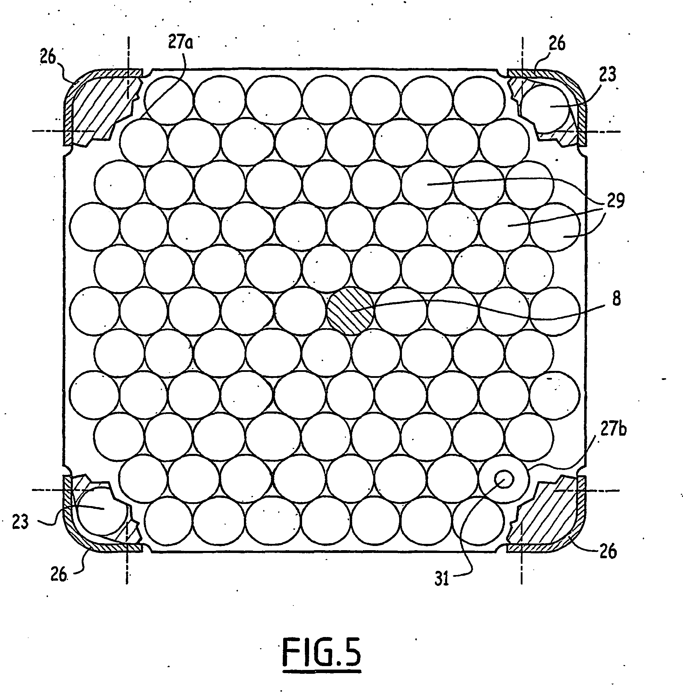

L'embout supérieur 21 a comporte des moyens pour assurer la manutention de la structure de support 20, par des dispositifs de manutention analogues à ceux utilisés pour la manutention d'assemblages de combustible dans la piscine du combustible du réacteur nucléaire. L'embout supérieur 21a comporte de plus des manchettes de fixation 22 prolongeant l'embout dans la direction axiale vers le bas et suivant une certaine hauteur. Les manchettes 22 assurent l'assemblage de l'embout supérieur réalisé sous forme démontable et de tirants 23 de direction axiale disposés suivant deux angles de la structure de support à section carrée. L'assemblage des tirants 23 et de la manchette 22 de l'embout supérieur 21 a est assuré par un boulon 24 introduit dans la manchette 22, au niveau de deux angles de la structure disposés suivant une diagonale de la section carrée de la structure 20. Les boulons 24 peuvent être vissés ou dévissés depuis la partie supérieure de l'embout de manutention 21a pour assurer la fixation ou le démontage de l'embout 21a. Les tirants 23 sont fixés à leur partie inférieure sur l'embout inférieur 21b et assurent la liaison entre les deux embouts et la transmission des efforts, lorsque la structure de support est chargée en capsules renfermant des crayons non étanches. La structure de support 20 comporte également des plaques entretoises 25 qui sont réparties suivant la longueur de la structure, dans la direction axiale, et qui comportent des ouvertures de passage des tirants assurant l'assemblage et la rigidité de la structure. Chacune des plaques entretoises 25 est traversée par un réseau d'ouvertures permettant chacune le passage d'une capsule 8, les grilles-entretoises permettant de maintenir les capsules 8 suivant une disposition en réseau dans les plans transversaux de la structure, comme représenté sur la figure 5.

La structure de support 20 peut comporter également des cornières de rigidification et d'assemblage 26, dans la direction longitudinale axiale et suivant ses quatre arêtes verticales. Toutefois, pour pouvoir effectuer un démantèlement et un retraitement de la structure, il est préférable de ne pas utiliser de cornières d'angle et de rigidifier la structure à l'aide de tubes ou tirants disposés suivant certains emplacements de capsules à l'intérieur de la structure.

Le réseau d'emplacements de stockage dans chacun desquels est placée une capsule 8, comme représenté sur la figure 5, comporte deux emplacements aux positions particulières 27a et 27b servant, pour l'un (27a), pour le remplissage des capsules 8 en crayons non étanches et, pour l'autre (27b), pour la mise sous pression de gaz inerte de l'intérieur de la capsule.

L'embout inférieur 21b comporte des logements 29 destinés à recevoir chacun le bouchon inférieur 9 d'une capsule 8, les ouvertures 29 étant disposées suivant un réseau correspondant au réseau des ouvertures de passage des plaques entretoises 25.

Pour faciliter le retraitement de la structure, il est préférable de ne pas encastrer les capsules 8 dans l'embout inférieur 21b de manière à pouvoir réserver un jeu axial approprié.

Comme il est visible sur la figure 5, à l'emplacement 27b, l'embout inférieur 21b comporte, dans l'ouverture de réception 29 d'une extrémité inférieure de capsule, un pion 31 en saillie vers le haut permettant d'actionner la soupape 10 du bouchon inférieur 9 d'une capsule introduite dans l'emplacement 27b de la structure de support pour ouvrir la soupape et permettre l'échappement d'eau contenue dans la capsule pour réaliser le remplissage en gaz inerte de l'intérieur de la capsule 8.

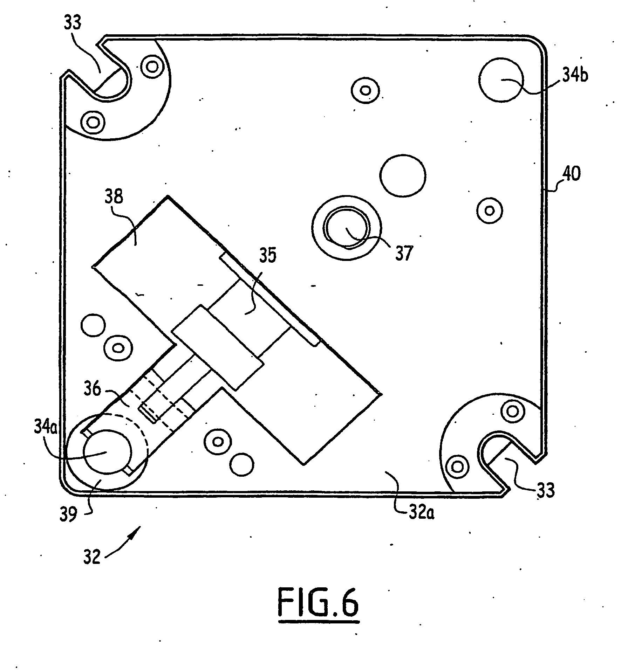

Sur la figure 6, on a représenté un dispositif de guidage et de maintien de capsules désigné de manière générale par le repère 32 qui est destiné à être placé au-dessus de la partie supérieure de la structure de support 20 après démontage de l'embout supérieur 21 a.

Le dispositif de guidage et de maintien 32 comporte une plaque de centrage 32a de forme carrée ayant la dimension de la section de la structure de support 20 et comportant, suivant deux angles placés suivant une diagonale de la plaque 32a, deux ouvertures de positionnement 33 ouvertes vers l'extérieur et suivant le bord desquelles sont montées des pièces de guidage fixées sur la plaque de centrage 32a.

La plaque de centrage 32a est de plus traversée, dans deux parties situées dans des angles de la plaque 32a placées suivant la seconde diagonale de la section, par des ouvertures 34a et 34b permettant d'assurer le passage de capsules respectivement vers les emplacements 27a et 27b, lorsque le dispositif de guidage et de maintien 32 est engagé par ses ouvertures 33 sur des moyens de centrage de la structure de support 20.

Sous la plaque 32a du dispositif de guidage et de maintien 32 est disposé un vérin de serrage 35 dont la tige dirigée suivant la seconde diagonale de la plaque 32a est solidaire d'un patin de serrage 36 dirigé vers l'ouverture 34a dans laquelle on peut réaliser l'introduction d'une capsule 8. Par actionnement du vérin 35, on peut déplacer le patin de serrage pour qu'il vienne en prise avec la surface extérieure d'une capsule pour réaliser son maintien, en particulier à l'encontre d'un couple de dévissage ou de vissage du bouchon supérieur de la capsule.

La plaque 32a comporte également une ouverture de manutention 37 au voisinage de sa partie centrale pour permettre la prise du dispositif 32 pour sa mise en place sur la structure de support à l'intérieur de la piscine du combustible.

La plaque 32a comporte également un évidement 38 permettant l'introduction de capsules dans des emplacements différents des emplacements 27a et 27b.

On va maintenant décrire une opération de conditionnement d'un crayon de combustible non étanche selon l'invention.

Les crayons défectueux non étanches se trouvent à l'intérieur de la piscine du combustible, soit dans des assemblages de combustible en cours de réparation dont on a enlevé un embout pour donner accès aux crayons de combustible, soit dans une structure de recueil intermédiaire de crayons défectueux telle qu'un carquois ayant la forme d'un assemblage de combustible.

Le carquois pour crayons défectueux ou le ou les assemblages présentant des crayons défectueux sont déposés dans un râtelier de stockage d'assemblages de combustible dans le fond de la piscine. Une première opération consiste à transférer les crayons défectueux dans une station de réparation d'assemblages non étanches à proximité de la nacelle du descenseur d'assemblages de combustibles de la piscine.

Puis on met en place, dans le descenseur desservant la piscine du combustible, le carquois 20 pour capsules 8 constituant la structure de support de capsules et on enlève l'embout supérieur de manutention 21a du carquois 20 pour capsules 8.

On met en place le dispositif de guidage et de maintien 32 sur la structure de support 20 des capsules. On prend en charge une capsule vide avec l'outil de manutention de capsules 15 dont le tube extérieur profilé 15a est engagé sur la partie profilée du bouchon supérieur de la capsule et le tube intérieur vissé à l'intérieur de l'ouverture taraudée du bouchon supérieur de la capsule.

Les capsules 8 pour crayons non étanches sont stockées soit sur le bord de la piscine, soit dans le carquois 20 pour capsules 8 constituant la structure de support.

On introduit la capsule prise en charge par l'outil de manutention, à travers l'ouverture 34a du dispositif de guidage et de maintien 32, dans l'emplacement de chargement 27a de la structure de support 20. On réalise le bridage de la capsule par actionnement du vérin 35 du dispositif de guidage et de maintien 32, le patin de serrage 36 assurant le serrage du corps de la capsule contre une pièce d'appui solidaire de la plaque 32a du dispositif 32.

On dévisse le bouchon supérieur 14 de la capsule 8 avec l'outil de manutention 15 de la capsule, le bouchon 14 restant solidaire de l'outil de manutention 15 après le dévissage.

On met en place une tulipe de guidage 39 au-dessus de la plaque de centrage 32a du dispositif 32, la tulipe 39 comportant une partie tronconique évasée dirigée vers le haut.

On extrait un crayon non étanche de la station de réparation d'assemblages de combustible à l'aide d'un outil de manutention de crayons de la piscine du combustible.

On introduit le crayon défectueux dans la capsule 8 disposée dans l'emplacement 27a grâce à la tulipe 39 servant au guidage du crayon non étanche.

La plaque de centrage 32a est entourée par un bord relevé constituant un cadre de protection 40 qui permet de maintenir, sur la plaque, des pastilles de combustible tombées éventuellement lors de la mise en place du crayon de combustible dans la capsule.

Le dispositif permet de réaliser l'encapsulage de tout crayon défectueux, même dans le cas de crayons fortement détériorés ou cassés.

On réalise le serrage du bouchon avec un couple de serrage prédéterminé puis on desserre le patin de bridage 36 pour libérer la capsule.

On transfère la capsule avec l'outil de manutention 15, d'abord au-dessus de l'emplacement 27b de la structure de support, puis on introduit la capsule dans l'emplacement 27b à travers l'ouverture 34b de la plaque 32a.

Lorsque le bouchon inférieur 9 de la capsule 8 parvient dans l'ouverture 29 de l'embout inférieur 21b, le pion 31 actionne la soupape 10 dans le sens de l'ouverture, pour ouvrir l'espace intérieur de la capsule vers la piscine.

On introduit du gaz inerte sous pression, par exemple de l'argon ou de l'hélium, dans l'espace interne de la capsule, en alimentant le tube intérieur 15b de l'outil de manutention 15 en gaz inerte sous pression qui repousse la soupape 17 du bouchon supérieur 14 de la capsule dans le sens de l'ouverture. Le gaz inerte sous pression chasse l'eau qui se trouve dans la capsule pour la renvoyer dans la piscine du combustible après passage à travers le filtre 13.

Lorsque le remplissage en gaz inerte de la capsule est terminé, on soulève la capsule à l'aide de l'outil de manutention 15, ce qui permet de refermer la soupape 10 du bouchon inférieur 9.

On met alors en place la capsule 8 renfermant un crayon non étanche, dans un emplacement de stockage de la structure de support 20.

Lorsqu'on a réalisé le remplissage de la structure de support 20, chacun des emplacements contenant une capsule renfermant un crayon non étanche, on remet en place l'embout supérieur du carquois et on dépose le carquois rempli de capsules dans le râtelier de stockage des assemblages de combustible en fond de piscine.

On peut procéder ensu ite à des opérations de transport, de stockage ou d'entreposage.

Un stockage de longue durée ou un entreposage de très longue durée des crayons non étanches peut être réalisé ultérieurement dans une installation appropriée.

La structure de support renfermant des capsules contenant les crayons non étanches peut être transportée vers un site de stockage de longue durée ou d'entreposage de très longue durée sur lequel des structures de stockage peuvent être déposées dans des emplacements réservés.

Pendant le transport et le stockage ou l'entreposage, la capsule 8 constitue une barrière pour le combustible en plus de la première barrière constituée par la gaine du crayon qui est défectueuse.

La paroi de la capsule qui est généralement en acier inoxydable permet d'éviter tout rejet de produit radioactif à l'extérieur de la capsule, soit pendant le transport, soit pendant le stockage de longue durée ou l'entreposage de très longue durée.

Le transport et la manutention de la structure de stockage 20 sont réalisés sans difficulté dans la mesure où la structure de stockage contenant des crayons défectueux présente les mêmes caractéristiques géométriques et mécaniques qu'un assemblage de combustible et une masse voisine.

Un stockage de longue durée ou un entreposage de très longue durée à l'intérieur des capsules est possible. En tenant compte du fait que les gaz de fission contenus à l'origine dans le crayon se sont échappés à travers les fissures des gaines des crayons non étanches, on a évalué l'augmentation de pression à l'intérieur de la gaine, par génération d'hélium, au cours d'une période de l'ordre de trois cents ans. L'augmentation de pression prévisible s'avère limitée et ne met pas en cause la résistance de la capsule. La puissance résiduelle des crayons dépend du temps de stockage en piscine avant encapsulage du crayon ; en pratique, des niveaux de puissance résiduelle acceptables peuvent être obtenus avant encapsulage des crayons non étanches.

La température des crayons non étanches, à l'intérieur des capsules sera inférieure à 400°C dans tous les cas, cette température étant de l'ordre de 200°C pendant les premières années de stockage lorsque le combustible est l'oxyde d'uranium UO₂.

Le procédé de stockage suivant l'invention peut donc être utilisé pour des stockages d'une durée de cinquante à cent ans ou des entreposages d'une durée allant jusqu'à trois cents ans, par exemple.

La structure de support peut être constituée par un conteneur de transport et/ou de stockage comportant au moins un emplacement (et généralement plusieurs emplacements) de réception d'une structure de chargement ou d'une capsule.

Un moyen d'entreposage peut être utilisé, dans le cadre de l'invention, comme structure de support de capsules 8 renfermant des crayons défectueux en vue de leur entreposage de très longue durée. Pour cela, le moyen d'entreposage renfermant au moins un étui dont la partie supérieure est ouverte peut être disposé dans la piscine du combustible, pour recevoir des capsules. On peut également réaliser le remplissage des étuis à l'extérieur de la piscine, dans une installation appropriée.

Après qu'on a effectué le remplissage d'une capsule 8 en introduisant un crayon défectueux dans la capsu le, puis une mise sous pression de gaz inerte de l'intérieur de la capsule et une fermeture étanche du bouchon dans une structure de chargement telle que la structure 20, comme décrit plus haut, on prend en charge la capsule et on vient la déposer dans le ou l'un des étuis du moyen d'entreposage.

Lorsque l'étui est rempli de capsules, on referme l'étui.

On peut réaliser le transport du moyen d'entreposage renfermant les étuis remplis de capsules vers une zone d'entreposage de très longue durée des crayons de combustible non étanches à l'intérieur des capsules elles-mêmes contenues dans les étuis du moyen d'entreposage.

Dans tous les cas, on évite toute dissémination de produits radioactifs dans l'environnement extérieur et on réalise un conditionnement du crayon défectueux de telle sorte qu'il puisse être entreposé pendant une très longue durée.

La structure d'entreposage peut être prévue pour recevoir au moins une structure de chargement telle que décrite plus haut, à la place d'un (ou plusieurs) étuis.

L'invention ne se limite pas strictement aux modes de réalisation qui ont été décrits.

C'est ainsi que la capsule peut présenter une forme différente de celle qui a été décrite de manière détaillée ci-dessus et que la structure de support pour le transport et le stockage des capsules peut présenter une forme différente d'un carquois, d'un conteneur ou d'un moyen d'entreposage tels que décrits.

L'invention s'applique au conditionnement de crayons non étanches d'assemblages de combustible pour tout type de réacteurs refroidis par de l'eau.

## Revendications

1. Procédé de conditionnement de crayons de combustible non étanches (6) en vue de leur transport et de leur stockage de longue durée ou de leur entreposage de très longue durée, chacun des crayons de combustible non étanches (ou crayons défectueux) (6) comportant des pastilles de matériau combustible dans une gaine tubulaire (6a) fermée à ses extrémités présentant un défaut d'étanchéité, les crayons de combustible non étanches étant déposés, dans une première étape, sous eau dans une piscine, procédé dans lequel :
- on met à disposition une pluralité de capsules (8) destinées à recevoir chacune un crayon de combustible et comportant une enveloppe tubulaire (8a) et deux bouchons (9, 14) de ses extrémités, dont l'un au moins est amovible,
- on place une structure de chargement (20) dans la piscine, dans une disposition lui permettant de recevoir au moins une capsule de la pluralité de capsules (8) avec son axe vertical
- on fixe, sur une extrémité supérieure ouverte de la structure de chargement (20), un dispositif de guidage et de maintien (32) de crayon de combustible (6) dans la capsule (8),
- on prélève un par un les crayons non étanches dans un moyen de recueil intermédiaire dans lequel sont placés des crayons non étanches provenant d'au moins un assemblage de combustible et on introduit une par une les capsules vides de crayons dans la structure de chargement (20) en position verticale dans un emplacement de chargement (27a) à la verticale d'une ouverture (34a) du dispositif de guidage et de maintien (32), et, pour chacune des capsules (8) destinées à recevoir un crayon défectueux (6) :
. on dévisse un bouchon (14) de la capsule (8) située à sa partie supérieure, on introduit un crayon défectueux (6) dans la capsule à travers un dispositif de guidage (29) placé suivant l'ouverture (34a) du dispositif de guidage et de maintien (32), on revisse le bouchon supérieur (14) de la capsule (8),
. on dispose la capsule (8) renfermant le crayon défectueux dans un emplacement d'une structure de support (20), la structure de support (20) comprenant plusieurs emplacements de réception de capsules (8), la structure de support (20) présentant la forme et les dimensions d'un assemblage de combustible nucléaire ou étant un moyen d'entreposage renfermant au moins un étui ayant sensiblement la forme et les dimensions d'un assemblage de combustible et destiné à recevoir une pluralité de capsules (8) et obturable par des couvercles étanches, et
- on transporte et qu'on stocke les crayons défectueux (6) à l'intérieur des capsules (8) placées dans la structure de support (20).

2. Procédé suivant la revendication 1, dans lequel la structure de chargement présente la forme et les dimensions d'un assemblage de combustible (1) et comporte une ossature destinée à recevoir les capsules (8) comportant un embout supérieur de manutention (21a) et un embout inférieur (21 b) de direction transversale assemblés entre eux par des tirants (23) de direction longitudinale, et une pluralité de plaques entretoises (25) de disposition transversale et réparties suivant la direction longitudinale de la structure de chargement (20) comportant chacune un réseau d'ouvertures destinées à assurer chacune le passage et le maintien d'une capsule (8), dans certaines desquelles sont engagés les tirants (23) d'assemblage de l'ossature de la structure de chargement (20), la structure (20) comportant un premier emplacement (27a) de chargement des capsules au voisinage d'un angle des sections transversales de la structure de chargement de forme carrée.

3. Procédé suivant la revendication 2, dans lequel la structure de chargement comporte de plus un second emplacement (27b) suivant lequel l'embout inférieur (21 b) de la structure de chargement comporte une ouverture de réception (29) d'un bouchon de fermeture de l'extrémité inférieure d'une capsule dans laquelle est placé un pion (31) en saillie vers l'intérieur de la structure de chargement, et les bouchons inférieurs (9) et supérieurs (14) des capsules (8) sont traversés axialement par un canal dans lequel est disposée une soupape (10, 17) de fermeture du canal rappelée en position de fermeture par un ressort hélicoïdal (11, 18), l'extrémité débouchante du canal (16) du bouchon supérieur (14) comportant un moyen de raccordement d'un conduit (15b) d'amenée de gaz inerte, et après avoir introduit un crayon défectueux dans une capsule (8) et revissé le bouchon supérieur (14) de la capsule (8) au premier emplacement de chargement (27a), on transporte la capsule (8) au second emplacement (27b) de remplissage en gaz inerte, on introduit le bouchon inférieur (9) de la capsule dans le logement (29) correspondant de l'embout inférieur (21b), de telle sorte que le pion (31) en saillie soulève la soupape (10) du bouchon inférieur (9) en position d'ouverture et on envoie un gaz inerte sous pression tel que l'argon dans la partie d'extrémité d'entrée (16a) du canal (16) du bouchon supérieur (14), pour réaliser l'ouverture de la soupape (17) du bouchon supérieur (14) puis le remplissage en gaz inerte de l'espace intérieur de la capsule (8), de l'eau ou des gaz contenus dans la capsule (8) étant chassés par le canal (9a) du bouchon inférieur (9), on interrompt l'alimentation de gaz inerte après remplissage de l'espace interne de la capsule (8), de manière telle que la soupape de fermeture (17) du bouchon supérieur (14) se referme, le crayon défectueux (6) étant alors stocké à l'intérieur de la capsule (8) en atmosphère de gaz inerte sous pression.

4. Procédé suivant l'une quelconque des revendications 2 et 3, dans lequel la structure de support (20) des capsules (8) dans laquelle on réalise le transport et le stockage de longue durée des capsules (8) renfermant les crayons défectueux est constituée par la structure de chargement (20) elle-même.

5. Procédé suivant la revendication 1, dans lequel la structure de support (20) des capsules (8) renfermant des crayons de combustible défectueux est constituée par un conteneur de transport et/ou de stockage comportant au moins un emplacement de réception de l'un au moins d'une structure de chargement (20) et d'une capsule (8).

6. Procédé suivant la revendication 1, dans lequel la structure de support (20) est un moyen d'entreposage renfermant au moins un étui ayant sensiblement la forme et les dimensions d'un assemblage de combustible et destiné à recevoir une pluralité de capsules (8) et obturable par des couvercles étanches, et dans lequel une barrière étanche est constituée autour de chacun des crayons défectueux par l'un au moins de la capsule (8) renfermant le crayon et d'un étui renfermant la capsule (8).

7. Procédé suivant la revendication 1, dans lequel la structure de support (20) est un moyen d'entreposage renfermant au moins un étui ayant sensiblement la forme et les dimensions d'un assemblage de combustible et destiné à recevoir une pluralité de capsules (8) et obturable par des couvercles étanches, et dans lequel le moyen d'entreposage est réalisé pour recevoir au moins une structure de chargement (20) à la place d'un étui.

8. Dispositif de conditionnement pour la mise en oeuvre d'un procédé selon la revendication 1, le dispositif comportant :
- une structure de chargement (20) de crayons défectueux (6) dans les capsules (8) comportant un emplacement (27a) de chargement de chaque capsule (8) avec un crayon défectueux et un emplacement (27b) de remplissage de chaque capsule (8) en gaz inerte,
- un dispositif de guidage et de maintien (32) comportant des moyens (33) de positionnement sur la structure de chargement (20),
- une structure de support (20) de capsules (8) pour un stockage de longue durée ou un entreposage de très longue durée, la structure de support (20) comprenant plusieurs emplacements de réception de capsules (8), la structure de support (20) présentant la forme et les dimensions d'un assemblage de combustible nucléaire ou étant un moyen d'entreposage renfermant au moins un étui ayant sensiblement la forme et les dimensions d'un assemblage de combustible destiné à recevoir une pluralité de capsules (8) et obturable par des couvercles étanches,
- un outil (15) de manutention et de remplissage des capsules (8).

9. Dispositif suivant la revendication 8 pour la mise en oeuvre du procédé selon la revendication 3,dans lequel :
- la structure de chargement (20) présente la forme et les dimensions d'un assemblage de combustible (1) et comporte un embout supérieur (21a) et un embout inférieur (21 b) assemblés entre eux par des tirants (23) de direction longitudinale par rapport aux embouts (21 a, 21 b) de direction transversale, une pluralité de plaques entretoises (25) dans des dispositions transversales réparties suivant la direction longitudinale de la structure de chargement (20) et un pion d'actionnement (31) d'une soupape (10) disposée dans un canal (9a, 9b) traversant un bouchon inférieur (9) de chaque capsule (8), au niveau de l'emplacement de remplissage (27b),
- le dispositif de guidage et de maintien (32) comporte une plaque de centrage (32a) munie de moyens (33) de positionnement sur la structure de chargement (20), une première et une seconde ouvertures (34a, 34b) traversant la plaque de centrage (32a) et un moyen (35, 36) de serrage d'une capsule (8) introduite dans la structure de chargement (20) dans l'emplacement de chargement (27a) ainsi qu'une tulipe de guidage (39) pouvant être placée sur la plaque de centrage (32a) au niveau de la première ouverture (34a), et
- l'outil (15) de manutention et de remplissage des capsules (8) comporte un tube extérieur (15a) profilé pour son engagement sur un bouchon supérieur (14) profilé d'une capsule (8) et sa solidarisation en rotation avec le bouchon supérieur (14) vissable et dévissable sur un corps (8a) de la capsule (8) et un tube intérieur (15b) d'amenée de gaz raccordable à un canal (14b, 14c) traversant le bouchon supérieur (14) de chaque capsule (8).

10. Dispositif selon la revendication 8, dans lequel la structure de chargement (20) comporte une pluralité d'emplacements de stockage de capsules (8) et constitue la structure de support de capsules (8).

## Claims

1. Method for processing non-fluid-tight fuel rods (6) in order to transport and store them for a long time or contain them for a very long period of time, each of the non-fluid-tight fuel rods (or defective rods) (6) comprising pellets of fuel material in a tubular cladding (6a) which is closed at the ends thereof and which is defective in terms of fluid-tightness, the non-fluid-tight fuel rods being deposited, in a first step, under water in a pit, in which method:
- there are provided a plurality of capsules (8) which are intended to each receive a fuel rod and which comprise a tubular casing (8a) and two end plugs (9, 14) for the ends thereof, at least one of which is removable,
- a charging structure (20) is placed in the pit, in an arrangement which allows it to receive at least one capsule from the plurality of capsules (8) with the vertical axis thereof,
- there is fixed, to an open upper end of the charging structure (20), a guiding and retention device (32) for a fuel rod (6) in the capsule (8),
- the non-fluid-tight rods which are located in an intermediate receiving means in which the rods are placed which originate from at least one fuel assembly are removed one by one and the empty capsules of rods are introduced one by one into the charging structure (20) in a vertical position in a charging location (27a) perpendicularly relative to an opening (34a) of the charging device (32) and, for each of the capsules (8) which are intended to receive a defective rod (6):
- an end plug (14) is unscrewed from the capsule (8) which is located at the upper portion thereof, a defective rod (6) is introduced into the capsule through a guiding device (29) which is positioned in accordance with the opening (34a) of the guiding and retention device (32), the upper end plug (14) of the capsule (8) is screwed tight again,
- the capsule (8) which contains the defective rod is arranged in a location of a support structure (20) similar to the charging structure, the support structure (20) comprising a plurality of locations for receiving capsules (8), the support structure (20) having the shape and dimensions of a nuclear fuel assembly or being a containment means which contains at least one casing which substantially has the shape and the dimensions of a fuel assembly and which is intended to receive a plurality of capsules (8) and which can be closed by means of fluid-tight covers, and
- the defective rods (6) are transported and stored inside the capsules (8) which are placed in the support structure (20).

2. Method according to claim 1, wherein the charging structure has the shape and the dimensions of a fuel assembly (1) and comprises a framework which is intended to receive the capsules (8) which comprise a top handling nozzle (21a) and a bottom nozzle (21b) having a transverse direction which are assembled by means of tie-rods (23) having a longitudinal direction and a plurality of support plates (25) which are arranged transversely and which are distributed in the longitudinal direction of the charging structure (20) and which each comprise a network of openings which are intended to each provide passage and retention for a capsule (8), in some of which there are engaged the assembly tie-rods (23) of the framework of the charging structure (20), the structure (20) comprising a first location (27a) for charging the capsules in the region of a corner of the square cross-sections of the charging structure.

3. Method according to claim 2, wherein the charging structure further comprises a second location (27b) in accordance with which the bottom nozzle (21b) of the charging structure comprises an opening (29) for receiving a closure end plug of the lower end of a capsule, in which there is placed a pin (31) which protrudes towards the inner side of the charging structure and there extends axially through the lower end plug (9) and upper end plug (14) of the capsules (8) a channel in which there is arranged a closure valve (10, 17) of the channel which is returned into the closure position by a helical spring (11, 18), the opening end of the channel (16) of the upper end plug (14) comprising a means for connecting an inert gas supply pipe (15b) and, after a defective rod has been introduced into a capsule (8) and the upper end plug (14) of the capsule (8) has been rescrewed to the first charging location (27a), the capsule (8) is transported to the second inert gas filling location (27b), the lower end plug (9) of the capsule is introduced into the corresponding housing (29) of the bottom nozzle (21b) so that the protruding pin (31) lifts the valve (10) of the lower end plug (9) into an open position and a pressurised inert gas, such as argon, is conveyed into the end inlet portion (16a) of the channel (16) of the upper end plug (14) in order to open the valve (17) of the upper end plug (14) then to fill the inner space of the capsule (8) with inert gas, water or gases contained in the capsule (8) having been discharged via the channel (9a) of the lower end plug (9), the supply of inert gas is interrupted after the internal space of the capsule (8) is filled, in such a manner that the closure valve (17) of the upper end plug (14) closes, the defective rod (6) being stored inside the capsule (8) under an atmosphere of pressurised inert gas.

4. Method according to either claim 2 or claim 3, wherein the support structure (20) of the capsules (8) in which the capsules (8) which contain the defective rods are transported and stored long-term is constituted by the charging structure (20) itself.

5. Method according to claim 1, wherein the support structure (20) of the capsules (8) which contain defective fuel rods is constituted by a transport and/or storage container which comprises at least one location for receiving at least either a charging structure (20) or a capsule (8).

6. Method according to claim 1, wherein the support structure (20) is a containment means which contains at least one casing which has substantially the shape and the dimensions of a fuel assembly and which is intended to receive a plurality of capsules (8) and which can be closed by means of fluid-tight covers, and wherein a fluid-tight barrier is constituted around each of the defective rods by at least either the capsule (8) which contains the rod or a casing which contains the capsule (8).

7. Method according to claim 1, wherein the support structure (20) is a containment means which contains at least one casing which has substantially the shape and the dimensions of a fuel assembly and which is intended to receive a plurality of capsules (8) and which can be closed by means of fluid-tight covers and wherein the containment means is constructed in order to receive at least one charging structure (20) in place of a casing.

8. Processing device for implementing a method according to claim 1, the device comprising:
- a structure (20) for charging defective rods (6) into the capsules (8) comprising a location (27b) for charging each capsule (8) with a defective rod and a location (27b) for filling each capsule (8) with inert gas,
- a guiding and retention device (32) which comprises means (32a) for positioning on the charging structure (20),
- a support structure (20) similar to the charging structure for capsules (8) for long-term storage or very long-term containment, the support structure (20) comprising several locations for receiving capsules (8), the support structure (20) having the shape and the dimensions of a nuclear fuel assembly or being a containment means containing at least one casing which has substantially the shape and the dimensions of a fuel assembly which is intended to receive a plurality of capsules (8) and which can be closed by means of fluid-tight covers,
- a tool (15) for handling and filling the capsules (8).

9. Device according to claim 8 for implementing the method according to claim 3, wherein:
- the charging structure (20) has the shape and the dimensions of a fuel assembly (1) and comprises a top nozzle (21a) and a bottom nozzle (21b) which are assembled by means of tie-rods (23) having a longitudinal direction relative to the nozzles (21a, 21b) having a transverse direction, a plurality of support plates (25) in transverse arrangements which are distributed in the longitudinal direction of the charging structure (20) and a pin (31) for activating a valve (10) which is arranged in a channel (9a, 9b) which extends through a lower end plug (9) of each capsule (8), in the region of the filling location (27b),
- the guiding and retention device (32) comprises a centering plate (32a) which is provided with means (33) for positioning on the charging structure (20), a first and a second opening (34a, 34b) which extend through the centering plate (32a) and a means (35, 36) for clamping a capsule (8) which is introduced into the charging structure (20) in the charging location (27a) and a guiding bell-shaped end-piece (39) which can be placed on the centering plate (32a) in the region of the first opening (34a), and
- the tool (15) for handling and filling the capsules (8) comprises an outer tube (15a) which is profiled in order to be engaged with a profiled upper end plug (14) of a capsule (8) and fixed in terms of rotation to the upper end plug (14) which can be screwed and unscrewed to/from a body (8a) of the capsule (8) and an inner gas supply tube (15b) which can be connected to a channel (14b, 14c) which extends through the upper end plug (14) of each capsule (8).

10. Device according to claim 8, wherein the charging structure (20) comprises a plurality of capsule storage locations (8) and constitutes the support structure for capsules (8).

## Patentansprüche

1. Verfahren zur Aufbereitung unversiegelter Brennstäbe (6) hinsichtlich ihres Transports und ihrer Langzeitlagerung oder ihrer Endlagerung, wobei jeder der unversiegelten Brennstäbe (oder fehlerhaften Brennstäbe) (6), die in einem an seinen Enden verschlossenen Hüllrohr (6a) Brennstofftabletten enthalten, einen Dichtheitsfehler aufweist, die unversiegelten Brennstäbe in einem ersten Schritt in einem Becken unter Wasser deponiert werden und das Verfahren dabei umfasst:
- Bereitstellen einer Vielzahl von Kapseln (8), von denen jede einen Brennstab aufnehmen kann und eine röhrenförmige Hülle (8a) und zwei Stopfen (9, 14) an ihren Enden umfasst, von denen wenigstens einer abnehmbar ist,
- Platzieren einer Ladestruktur (20) in dem Becken in einer Anordnung, dass sie aus der Vielzahl Kapseln (8) wenigstens eine Kapsel mit ihrer vertikalen Achse aufnehmen kann,
- Befestigen - auf einem offenen oberen Ende der Ladestruktur (20) - einer Führungs- und Haltevorrichtung (32) des Brennstabs (6) in der Kapsel (8),
- Entnehmen, Stück für Stück, der unversiegelten Brennstäbe aus einer Zwischenaufnahmeeinrichtung, in der sich von wenigstens einem Brennelement stammende unversiegelte Brennstäbe befinden, und Einführen, Stück für Stück, der leeren Brennstabkapseln in die Ladestruktur (20) in vertikaler Position in einen Ladeplatz (27a), vertikal zu einer Öffnung (34a) der Führungs- und Haltevorrichtung (32), und für jede der zur Aufnahme eines fehlerhaften Brennstabs (6) bestimmten Kapsel (8):
. Ausschrauben eines im Oberteil der Kapsel (8) befindlichen Stopfens (14), Einführen eines fehlerhaften Brennstabs (6) in die entsprechend der Öffnung (34a) der Führungs- und Haltevorrichtung (32) angeordneten Kapsel durch eine Führungsvorrichtung (29) hindurch und Wiedereinschrauben des oberen Stopfens (14) der Kapsel (8),
. Anordnen der den fehlerhaften Brennstab enthaltenden Kapsel (8) auf einem Platz einer Trägerstruktur (20), wobei die Trägerstruktur (20) mehrere Aufnahmeplätze für Kapseln (8) umfasst, die Trägerstruktur (20) die Form und die Abmessungen eines Brennelements hat oder eine Lagerungseinrichtung ist, die wenigstens eine Hülle umfasst, die im Wesentlichen die Form und die Abmessungen eines Brennelements hat und die dazu bestimmt ist, eine Vielzahl Kapseln (8) aufzunehmen, verschließbar durch dichte Stopfen, und
- Transportieren oder Lagern der fehlerhaften Brennstäbe (6) im Innere der in der Trägerstruktur (20) platzierten Kapseln (8).

2. Verfahren nach Anspruch 1, bei dem die Ladestruktur die Form und die Abmessungen eines Brennelements (1) hat und umfasst: ein zur Aufnahme der Kapseln (8) bestimmtes Gestell, das umfasst: ein oberes Endstück (21 a) zur Handhabung und ein transversales unteres Endstück (21 b), miteinander verbunden durch longitudinale Zugstangen (23), und eine Vielzahl quergerichteter, über die Längsrichtung der Ladestruktur (20) verteilter Abstandshalterplatten (25), von denen jede ein Gitter mit Öffnungen für den Durchgang und den Halt einer Kapsel (8) umfasst, wobei in einigen von ihnen Zugstangen (23) für den Zusammenbau der Ladestruktur (20) sitzen und die Struktur (20) dabei einen ersten Ladeplatz (27a) der Kapseln in der Nähe eines Winkels der Querschnitte der Ladestruktur von quadratischer Form umfasst.

3. Verfahren nach Anspruch 2, bei dem die Ladestruktur zudem einen zweiten Platz (27b) umfasst, entsprechend dem das untere Endstück (21 b) der Ladestruktur eine Öffnung (29) zur Aufnahme eines Verschlussstopfens des unteren Endes einer Kapsel umfasst, in der sich ein ins Innere der Ladestruktur ragender Zapfen (31) befindet, und die unteren (9) und oberen (14) Stopfen der Kapseln (8) axial von einem Kanal durchquert werden, in dem sich ein Ventil (10, 17) zum Verschließen des Kanals befindet, das durch eine Spiralfeder (11, 18) in Verschlussstellung gehalten wird, wobei das die Mündungsöffnung des Kanals (16) des oberen Stopfens (14) eine Anschlusseinrichtung einer Zuführungsleitung (15b) von Inertgas umfasst und, nach Einführung eines fehlerhaften Brennstabs in eine Kapsel (8), man den oberen Stopfen (14) der Kapsel (8) in dem ersten Platz oder Ladeplatz (27a) wieder einschraubt, man die Kapsel (8) zum zweiten Platz oder Inertgas-Befüllungsplatz transportiert, man den unteren Stopfen (9) der Kapsel in den entsprechenden Sitz (29) des unteren Endstücks (21 b) einführt, so dass der herausragende Zapfen das Ventil (10) des unteren Stopfens (9) in die Öffnungsstellung hebt, man ein Inertgas wie etwa Argon unter Druck in den Eingangsendteil (16a) des Kanals (16) des oberen Stopfens (14) presst, um die Öffnung des Ventils (17) des oberen Stopfens (14) zu bewirken und den Innenraum der Kapsel (8) mit Inertgas zu füllen, wobei Wasser oder Gase, enthalten in der Kapsel (8), durch den Kanal (9a) des unteren Stopfens (9) hinausgetrieben werden, und man nach Auffüllung des Innenraums der Kapsel (8) die Einspeisung von Inertgas unterbricht, so dass das Verschlussventil (17) des oberen Stopfens (14) sich wieder schließt und der fehlerhafte Brennstab (6) dann im Innern der Kapsel (8) in Inertgas-Druckatmosphäre gelagert ist.

4. Verfahren nach einem der Ansprüche 2 und 3, bei dem die Trägerstruktur (20) der Kapseln (8), in der man den Transport und die Langzeitlagerung der die fehlerhaften Brennstäbe enthaltenden Kapseln (8) realisiert, durch die Ladestruktur (20) selbst gebildet wird.

5. Verfahren nach Anspruch 1, bei dem die Trägerstruktur (20) der fehlerhafte Brennstäbe enthaltenden Kapseln (8) durch einen Transport- und/oder Lagerungscontainer mit wenigstens einem Aufnahmeplatz von wenigstens einer Ladestruktur (20) und einer Kapsel (8) umfasst.

6. Verfahren nach Anspruch 1, bei dem die Trägerstruktur (20) eine Lagerungseinrichtung ist, die wenigstens eine Hülle mit im Wesentlichen der Form und den Abmessungen eines Brennelements umfasst und die dazu bestimmt ist, eine Vielzahl Kapseln (8) aufzunehmen, verschließbar durch dichte Stopfen, und bei der eine dichte Barriere um jeden fehlerhaften Brennstab herum durch wenigstens eine den Brennstab enthaltende Kapsel (8) und eine die Kapsel (8) enthaltende Hülle gebildet wird.

7. Verfahren nach Anspruch 1, bei dem die Trägerstruktur (20) eine wenigstens eine Hülle umfassende Lagerungseinrichtung ist, die im Wesentlichen die Form und die Abmessungen eines Brennelements hat und die dazu bestimmt ist, eine Vielzahl Kapseln (8) aufzunehmen, verschließbar durch dichte Stopfen, und bei der die Lagerungseinrichtung wenigstens eine Ladestruktur (20) anstelle einer Hülle aufnehmen kann.

8. Verpackungseinrichtung zur Anwendung eines Verfahrens nach Anspruch 1, wobei die Einrichtung umfasst:
- eine Ladestruktur (20) fehlerhafter Brennstäbe (6) in Kapseln (8), die einen Platz (27a) zum Beladen jeder Kapsel (8) mit einem fehlerhaften Brennstab und einen Platz (27b) zum Befüllen jeder Kapsel (8) mit Inertgas umfasst,
- eine Führungs- und Haltevorrichtung (32) mit Positionierungseinrichtungen (33) in der Ladestruktur (20),
- eine Trägerstruktur (20) der Kapseln (8) für eine Langzeitlagerung oder eine Endlagerung, wobei die Struktur (20) mehrere Aufnahmeplätze für Kapseln (8) hat, die Trägerstruktur (20) die Form und die Abmessungen eines Brennelements aufweist oder eine Lagerungseinrichtung ist, die wenigstens eine Hülle umfasst, die im Wesentlichen die Form und die Abmessungen eines Brennelements hat und die dazu bestimmt ist, eine Vielzahl Kapseln (8) aufzunehmen, verschließbar durch dichte Stopfen,
- ein Werkzeug (15) zur Handhabung und Befüllung der Kapseln (8).

9. Einrichtung nach Anspruch 8 zur Anwendung des Verfahrens nach Anspruch 3, bei der:
- die Ladestruktur (20) die Form und die Abmessungen eines Brennelements (1) hat und umfasst: ein oberes Endstück (21 a) und ein unteres Endstück (21 b), miteinander verbunden durch longitudinale Zugstangen (23), und eine Vielzahl quergerichteter, über die Längsrichtung der Ladestruktur (20) verteilter Abstandshalterplatten (25), und einen Betätigungszapfen (31) eines Ventils (10), angeordnet in einem einen unteren Stopfen (9) jeder Kapsel (8) durchquerenden Kanal (9a, 9b), in Höhe des Befüllungsplatzes (27b),
- die Führungs- und Haltevorrichtung (32) umfasst: eine Zentrierplatte (32a), versehen mit Einrichtungen (33) zur Zentrierung in der Ladestruktur (20), eine die Zentrierplatte (32a) durchquerende erste und zweite Öffnung (34a, 34b) und eine Spanneinrichtung (35, 36) einer in den Ladeplatz (27a) eingeführten Kapsel (8) sowie eine tulpen- bzw. trichterförmige Führungseinrichtung (39), die sich in Höhe der ersten Öffnung (34a) in der Zentrierplatte (32a) befinden kann, und
- das Handhabungs- und Befüllungswerkzeug (15) der Kapseln (8) umfasst: ein Außenrohr (15a), dessen Profil auf das Profil eines oberen Stopfens (14) einer Kapsel (8) passt, so dass es drehfest mit dem oberen Stopfen (14) verbunden werden kann und dieser in den Kapselkörper (8a) der Kapsel (8) hineingeschraubt und aus ihm herausgeschraubt werden kann, und ein unteres Rohr (15b) zur Gaszuführung, anschließbar an einen den oberen Stopfen (14) jeder Kapsel (8) durchquerenden Kanal (14b, 14c).

10. Einrichtung nach Anspruch 8, bei der die Ladestruktur (20) eine Vielzahl Lagerungsplätze für Kapseln (8) umfasst und die Trägerstruktur der Kapseln (8) bildet.
